Europäisches Patentamt

European Patent Office

Office européen des brevets

(19)

(11) Publication number: **0 506 177 A2**

# EUROPEAN PATENT APPLICATION

(12)

(21) Application number: **92200759.6**

(22) Date of filing: **17.03.92**

(51) Int. Cl.5: **H04N 3/15, G02B 13/10**

(30) Priority: **25.03.91 EP 91200659**

(43) Date of publication of application:
**30.09.92 Bulletin 92/40**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Snoeren, Rudolph Maria**
**c/o INT. OCTROOIBUREAU B.V. Prof.**
**Holstlaan 6**
**NL-5656 AA Eindhoven(NL)**
Inventor: **Dillen, Bartholomeus Goverdina**
**Maria Henricus**
**c/o INT. OCTROOIBUREAU B.V. Prof.**
**Holstlaan 6**
**NL-5656 AA Eindhoven(NL)**

(74) Representative: **Scheele, Edial François et al**
**INTERNATIONAAL OCTROOIBUREAU B.V.**
**Prof. Holstlaan 6**
**NL-5656 AA Eindhoven(NL)**

(54) **Television pick-up and display system, and television pick-up device and optical system suitable for use in such a system.**

(57) In a television pick-up and display system comprising a pick-up device having an image pick-up face whose aspect ratio deviates from an aspect ratio of the image display face of the image display device, the pick-up device can be rendered suitable for cooperation with the image display device by insertion of an anamorphotic optical system between an object plane and the image pick-up face. When use is made of an image pick-up face having a 4:3 aspect ratio and an image display face having a 16:9 aspect ratio, the anamorphotic optical system compresses an image of the object plane in the horizontal direction by a compression factor amounting to 0.75. When the compressed image of the image pick-up face is displayed, an image-filling, non-distorted image is obtained on the image display face.

EP 0 506 177 A2

The invention relates to a television pick-up and display system, comprising a television pick-up device having a rectangular image pick-up face, and an image display device which cooperates with the television pick-up device and which has a rectangular image display face, the television pick-up device comprising an optical system for imaging an object plane on the image pick-up face.

The invention also relates to a television pick-up device and an optical system suitable for use in such a system.

A television pick-up and display system of the kind set forth is known from European Patent Application EP 0 295 728-A1.

The cited Patent Application describes a television pick-up and display system in which a round exit window of an image intensifier tube is imaged on a rectangular CCD sensor by the optical system. The optical system comprises an anamorphotic element which transforms the image of the round exit window into an ellipse which is preferably tangent to the edges of the CCD sensor. Optimum use is thus made of the photosensitive surface of the CCD sensor and the resolution in the line direction is enhanced. During the line-wise reading out of the CCD sensor, *via* a shift register and the supply of the image signals to the image display device, the read-out frequency of the shift register is adjusted so as to cancel the image compression so that the elliptical image of the exit window of the image intensifier tube on the sensor is displayed as a circle on the image display device.

As has already been stated, the cited European Patent Application aims to optimize the use of the image pick-up face in order to enhance the resolution in the horizontal (line) direction. It is an object of the invention, however, to render a pick-up device which has an image pick-up face with a given aspect ratio suitable for cooperation, while maintaining optimum use of the image pick-up face, with an image display device having a different aspect ratio.

To achieve this, a television pick-up and display system in accordance with the invention is characterized in that the aspect ratios of the image pick-up face and the image display face deviate from one another, the optical system imaging an object plane having an aspect ratio equal to the aspect ratio of the image display face, so that it has the aspect ratio of the image pick-up face.

As a result of the use of the optical system between the object plane and the image pick-up face, said optical system compressing the object plane in one direction, an image formed by a television pick-up device whose image pick-up face has an aspect ratio (the ratio of the long side to the short side) which deviates from that of the image display face of the image display device can be displayed without parts of the image being cut off at the edges in the image display device or the image pick-up device.

An embodiment of a television pick-up and display system in accordance with the invention in which the optical system comprises an anamorphotic element which compresses an image of the object plane in one direction by a compression factor is characterized in that the product of the compression factor and the aspect ratio of the image display face is equal to the aspect ratio of the image pick-up face.

When use is made of an image pick-up face having an aspect ratio of, for example, 4:3 and of an image display face having an aspect ratio of, for example 16:9, as used in high-definition television, the image pick-up face can be imaged so as to register on the image display face by utilizing a compression factor of the anamorphotic element which amounts to 3/4 in the horizontal direction. In contrast with the known television pick-up and display system, electronic correction of the image signals of the image pick-up device is not necessary in order to eliminate image distortion caused by image compression.

An embodiment of a television pick-up and display system in accordance with the invention is characterized in that the optical system comprises a system of prisms.

When the object plane is imaged on the image pick-up face *via* a collimator lens, two prisms and a further lens, image compression with a high image quality can be obtained notably for remote object planes whose emitted radiation beams have been collimated and are incident on the optical system at small angles of aperture.

A further embodiment of a television pick-up and display system in accordance with the invention is characterized in that the optical system comprises a fibre optical system.

*Via* a lens, the object plane can be imaged on a number of optical fibres which are arranged in a matrix, in which the ratio of the sides is the same as the aspect ratio of the image display face. The fibre ends cooperating with the image pick-up device are arranged in a matrix in which the ratio of the sides is the same as the aspect ratio of the image pick-up face. The optical fibre ends can be imaged on the image pick-up face *via* a further lens. It is alternatively possible to couple the fibre ends optically to the image pick-up face without an intermediate lens by direct contact or *via* a transparent bonding agent. The latter is attractive notably when the optical system includes a zoom objective having a comparatively large aperture.

A further embodiment of a television pick-up and display device in accordance with the invention is characterized in that the optical system includes a cylindrical lens.

When a fibre-optical system is used in conjunction with a CCD sensor having an image pick-up face consisting of, for example 1200 x 590 pixels, the number of optical fibres should be much greater than the number of pixels in order to achieve image transfer without loss of resolution, thus preventing the occurrence of moiré patterns. Because optical fibre configurations of this kind are rather expensive at the time of filing of the present Application, it is advantageous to use a comparatively inexpensive anamorphotic element in the form of a cylindrical lens.

Some embodiments of a television pick-up and display system will be described in detail hereinafter with reference to the accompanying drawing. Therein:

Fig. 1 shows diagrammatically a television pick-up and display system in accordance with the invention,

Fig. 2 shows an anamorphotic element comprising a system of prisms, and

Fig. 3 is a lateral sectional view of a television pick-up tube comprising a system of prisms as shown in Fig. 2.

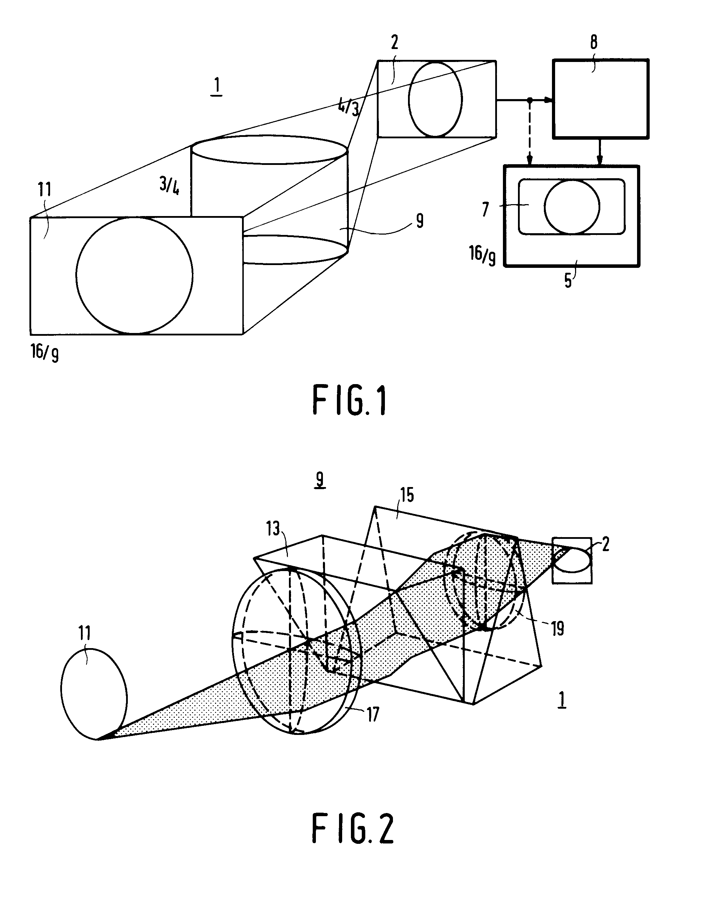

Fig. 1 shows a television pick-up device 1, comprising an image pick-up face 2 which is formed, for example by a CCD sensor. An optical system 9, comprising a cylindrical lens in the embodiment shown, images an plane 11 on the image pick-up face 2. *Via* a transmission device 8, an image signal generated by the television pick-up device 1 is applied to an image display device 5. The transmission device 8 comprises, for example correction circuits for establishing a non-linear relationship between the light intensity on the image pick-up face 2 and the generated red, green and blue image signals (gamma correction). This correction serves for partial compensation of the non-linear characteristic of the image display screen. The gamma-corrected colour image signals are applied to a combination circuit (matrix) in which the colour image signals are combined so as to form two colour-difference signals and a luminance signal. After filtering by means of a low-pass filter, the colour-difference signals modulate a colour auxiliary carrier and are combined with the luminance signal so as to form a video signal. Time multiplex combination of the colour-difference signals and the luminance signal so as to form a so-called MAC video signal is also possible. This video signal modulates a further carrier and is applied to the image display device 5 *via*, for example a transmission aerial or cable link. The image display device 5 comprises a receiver for forming monochromatic or colour image signals from the modulated video signal. The said transmission device 8 and the receiver of the image display device 5 are known components of NTSC, PAL and SECAM television systems and are not elaborated in the Figure. It is also possible to apply the image signal formed by the television pick-up device 1 directly to a television monitor 5, for example in X-ray television systems.

The optical system 9 images the object plane 11, having a 16:9 aspect ratio, on the image pick-up face 2, the optical system 9 compressing the image of the object plane 11 by a factor 3/4 in the horizontal direction. As a result, the object plane 11 is imaged so as to register on the image display face 7 having a 16:9 aspect ratio. In medical X-ray imaging utilizing an X-ray image intensifier tube or in applications with brightness intensifiers for night vision purposes, the object plane is formed by a circular exit window. When a cylindrical lens system is included in the optical system, the object plane is often bounded by a circular aperture. The actual shape of the object plane is not essential to the invention and may be circular, rectangular or irregular.

Fig. 2 diagrammmatically shows the television pick-up device 1 in which the optical system 9 is formed by two prisms 13 and 15, a collimator lens 17, and a lens 19. *Via* the optical system, the object plane 11, being circular in this case, is imaged as an ellipse on the image pick-up face 2. During operation, the image pick-up device is rotated, relative to the orientation shown in the Figure, through 90 degrees about the imaginary axis between the object plane 11 and the image pick-up face 2, so that the long side thereof extends in the horizontal direction.

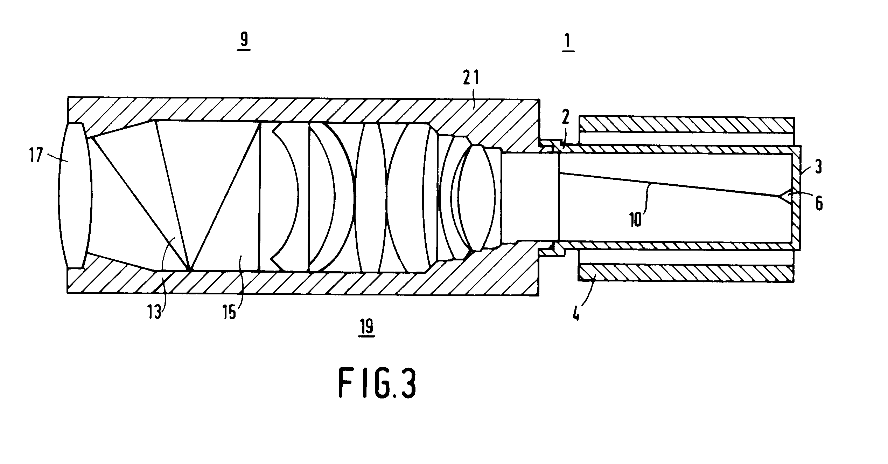

Fig. 3 is a lateral sectional view of a television pick-up device 1 in which a television pick-up tube 3 is mounted on a housing 21 accommodating the optical system 9. In the television pick-up tube 3 the image pick-up face 2 is formed by a photoconductive layer which is frame-wise scanned by an electron beam 10 which is emitted by a cathode 6 and which is focused on and deflected thereacross the image pick-up face 2 by way of coils 4.

**Claims**

1. A television pick-up and display system, comprising a television pick-up device (1) having a rectangular image pick-up face (2), and an image display device (5) which cooperates with the television pick-up device (1) and which has a rectangular image display face (7), the television pick-up device (1) comprising an optical system (9) for imaging an object plane (11) on the image pick-up face (2), characterized in that the aspect ratios of the image pick-up face (2) and the image display face (7) deviate from one another, the optical system (9) imaging an object plane having an aspect ratio equal to the aspect ratio of the image display face (7) so that it has the aspect ratio of the image pick-up face (2).

2. A television pick-up and display system as claimed in Claim 1, in which the optical system (9) comprises an anamorphotic element which compresses an image of the object plane (11) in one direction by a compression factor, characterized in that the product of the compression factor and the aspect ratio of the image display face (7) is equal to the aspect ratio of the image pick-up face (2).

3. A television pick-up and display system as claimed in Claim 1 or 2, characterized in that the aspect ratio of the image pick-up face (2) amounts to 4:3, the aspect ratio of the image display face (7) amounting to 16:9.

4. A television pick-up and display system as claimed in Claim 1, 2 or 3, characterized in that the optical system (9) comprises a system of prisms (13), (15).

5. A television pick-up and display system as claimed in Claim 1, 2 or 3, characterized in that the optical system comprises a fibre-optical system.

6. A television pick-up and display system as claimed in Claim 1, 2 or 3, characterized in that the optical system comprises a cylindrical lens.

7. A television pick-up device (1) suitable for use in a television pick-up and display system as claimed in any one of the preceding Claims.

8. An optical system (9) suitable for use in a television pick-up and display system as claimed in any one of the Claims 1 to 6.

FIG.1

FIG.2

FIG.3